# EUROPEAN PATENT APPLICATION

(11) **EP 2 566 047 A2**
(43) Date of publication of application: **06.03.2013**
(21) Application number: 12176633.1
(22) Date of filing: 17.07.2012
(51) Int. Cl.: H02P 27/08, H02P 7/29

(54) **Motor drive device and pump comprising the same**

(30) Priority: 29.08.2011 JP 2011186454
(71) Applicant: Panasonic Corporation, Osaka 571-8501 (JP)
(72) Inventor: Ueda, Hidetoshi, Chuo-ku, Osaka 540-6207 (JP); Syukuri, Youichi, Chuo-ku, Osaka 540-6207 (JP); Fukuda, Tetsuya, Chuo-ku, Osaka 540-6207 (JP); Kimura, Masakuni, Chuo-ku, Osaka 540-6207 (JP); Morizumi, Koichi, Chuo-ku, Osaka 540-6207 (JP)
(74) Representative: Appelt, Christian W.

(57) **Abstract**

A motor drive device comprises an instruction input unit to which an instruction input related to a power level of a motor is inputted, a motor voltage control unit controlling a motor voltage depending on an instruction voltage outputted based on the instruction input inputted to said instruction input unit, and a motor control unit operating said motor under PWM control depending on the instruction voltage outputted from said instruction input unit. Then, said motor voltage control unit is configured so as to decrease the motor voltage when a duty ratio of the PWM control is less than or equal to a predetermined value.

## Description

### TECHNICAL FIELD

The invention relates to a motor drive device and a pump comprising the same.

### BACKGROUND ART

As a motor for driving a pump, Japanese Patent Application Laid-Open No. 6-105563 discloses a motor drive device. The motor drive device performs PWM control when a small output capability is required, and then performs PAM control when a large output capability is required, so that an instructed speed value and a feedback value of a rotating speed follow each other. The motor drive device can reduce switching losses of a booster circuit and an inverter by using the PWM control and the PAM control.

However, the motor drive device performs only the PAM control with respect to controlling of a rotating speed during a high output, and thus can not perform controlling of the rotating speed with high-speed and minute control, and has such a problem. Also, the motor drive device has a problem that switching loss is large when performing the PWM control.

### DISCLOSURE OF THE INVENTION

It is an object of the present invention to provide a motor drive device and a pump comprising the same, which can perform controlling of a rotating speed with high-speed and minute control, and further can reduce switching loss.

A motor drive device according to the present invention comprises an instruction input unit to which an instruction input related to a power level of a motor is inputted, a motor voltage control unit controlling a motor voltage depending on an instruction voltage outputted based on the instruction input inputted to said instruction input unit, and a motor control unit operating said motor under PWM control depending on the instruction voltage outputted from said instruction input unit. Then, said motor voltage control unit is configured so as to decrease the motor voltage when a duty ratio of the PWM control is less than or equal to a predetermined value.

In the present invention, the motor drive device performs only the PWM control, and thereby can perform controlling of a rotating speed with high-speed and minute control during a high output. Furthermore, the motor drive device decreases the motor voltage during a low output, and thereby can reduce switching loss, which becomes a problem during the low output, through the PWM control.

Preferably, said motor voltage control unit is configured to apply a plurality of motor voltages corresponding to a plurality of instruction inputs, respectively, into said motor, and further is configured to control so that the duty ratio of the PWM control is more than or equal to a predetermined value when a motor voltage other than the lowest motor voltage in said plurality of motor voltages is applied.

Then, preferably, said plurality of motor voltages corresponding to said plurality of instruction inputs are set so as to have a relationship of geometric progression, and preferably, the instruction voltage is divided by a predetermined division ratio through a signal for changing said plurality of motor voltages depending on the instruction input.

Then, preferably, the instruction input is a DC voltage, or a voltage obtained by smoothing a PWM signal and changing the smooth PWM signal to a direct current.

A pump according to the present invention comprises the above-mentioned motor drive device as a power source.

### BRIEF DESCRIPTION OF THE DRAWINGS

Preferred embodiments of the invention will now be described in further details. Other features and advantages of the present invention will become better understood with regard to the following detailed description and accompanying drawings where:
Fig. 1 is a block circuit diagram of a motor drive device according to an embodiment of the present invention;

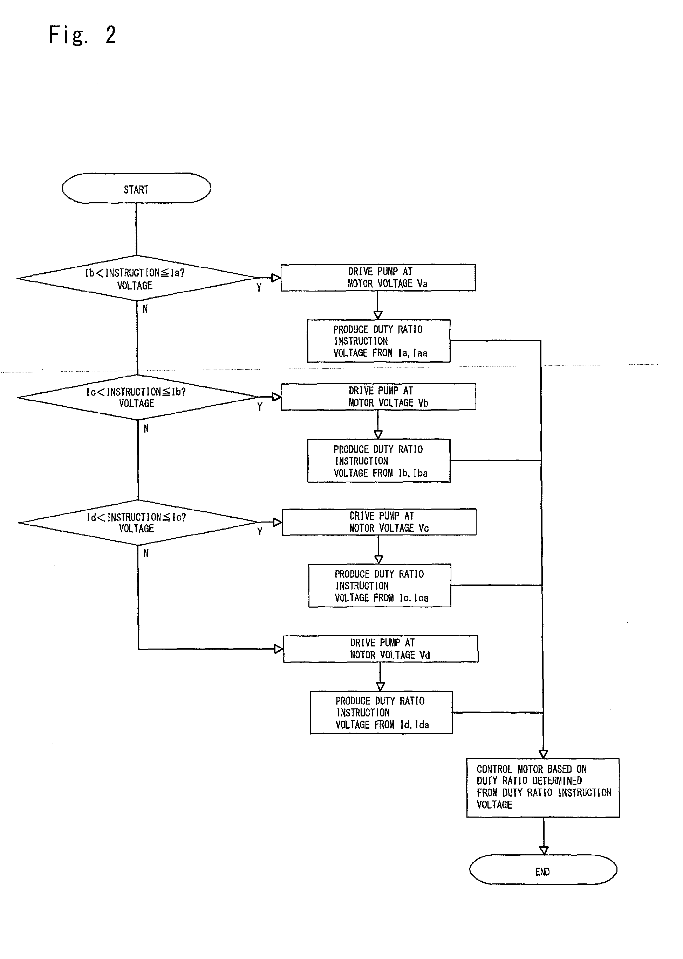

Fig. 2 is a flowchart showing operation of said motor drive device according to said embodiment of the present invention;
Fig. 3 is an explanation drawing for explaining operation of said motor drive device according to said embodiment of the present invention; and
Fig. 4 is an oblique drawing of a pump comprising said motor drive device according to said embodiment of the present invention.

### BEST MODE FOR CARRYING OUT THE INVENTION

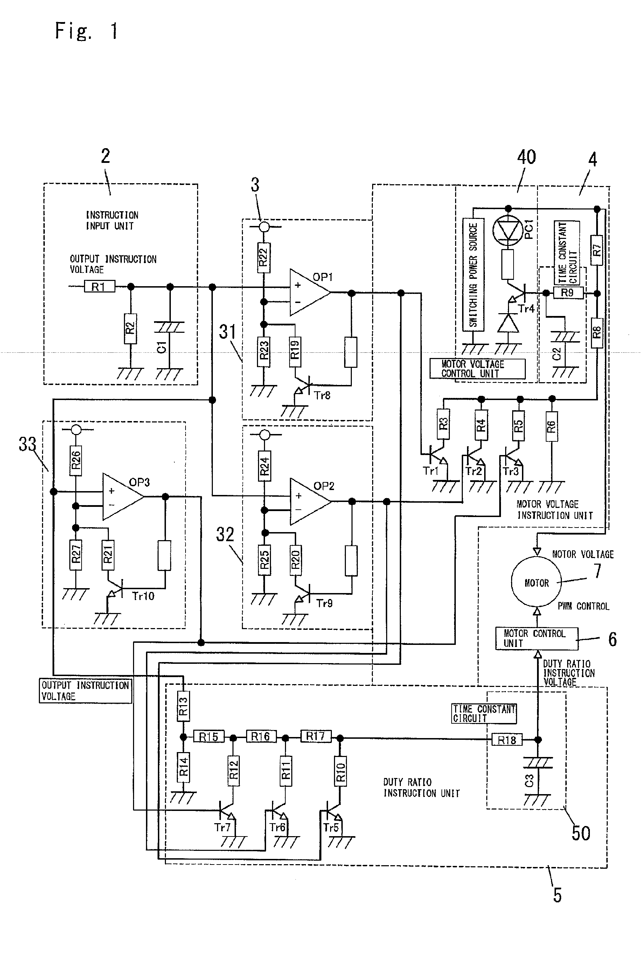

A motor drive device according to an embodiment of the present invention is explained below referring to Figures. The motor drive device shown in Fig. 1 comprises a motor 7 for driving a pump, an instruction input unit 2 to which an instruction input related to a power level of motor 7 is inputted, a determination circuit 3 (31, 32, 33) which compares an instruction voltage outputted from instruction input unit 2 with a predetermined voltage value and outputs comparison results, a motor voltage instruction unit 4 which produces an output signal based on combination of the comparison results outputted from determination circuit 3, a motor voltage control unit 40 which produces a motor voltage determined by the output signal produced by motor voltage instruction unit 4 and applies the motor voltage to motor 7, a duty ratio instruction unit 5 which produces an instruction voltage for determining a duty ratio of PWM control based on combination of the comparison results outputted from determination circuit 3, and a motor control unit 6 which determines the duty ratio based on the voltage outputted from duty ratio instruction unit 5 and then operates motor 7 under PWM control. Then, rotation of motor 7 is controlled by motor control unit 6.

The instruction voltage related to power level inputted to instruction input unit 2 is divided through a resistor R1 and a resistor R2, and then is smoothed by a capacitor C1 and is transmitted to determination circuit 3. Also, when a signal inputted to instruction input unit 2 is a PWM signal, the signal is divided through resistors R1 and R2 and then is smoothed by capacitor C1 and becomes an instruction voltage changed to a direct current.

In a case where a maximum output is required for motor 7 and after that the output of motor 7 is gradually reduced, operation of the motor drive device is explained as follow. When an instruction voltage Ia being maximum voltage value is inputted to instruction input unit 2, voltages in plus input terminals become more than voltages in minus input terminals in regard to all of operational amplifiers OP1 to OP3 in determination circuits 31, 32, 33 and then outputs in these operational amplifiers OP1 to OP3 become High-value. As a result, all of transistors Tr1 to Tr3 in motor voltage instruction unit 4 become ON-state, and then all of resistors R3 to R5 become connected to GND. Then, a voltage depending on a division ratio of resistors R3 to R8 is smoothed by resistors R3 to R8 and a time constant circuit composed of a resistor R9 and a capacitor C2, and then is inputted to a base terminal of a transistor Tr4 in motor voltage control unit 40.

In order to produce a predetermined motor voltage value Va determined by this division ratio, transistor Tr4 in motor voltage control unit 40 becomes ON-state, and a signal is fed back to a switching power source by light emitting of a photo-coupler PC1, and thereby the predetermined motor voltage Va is applied to motor 7.

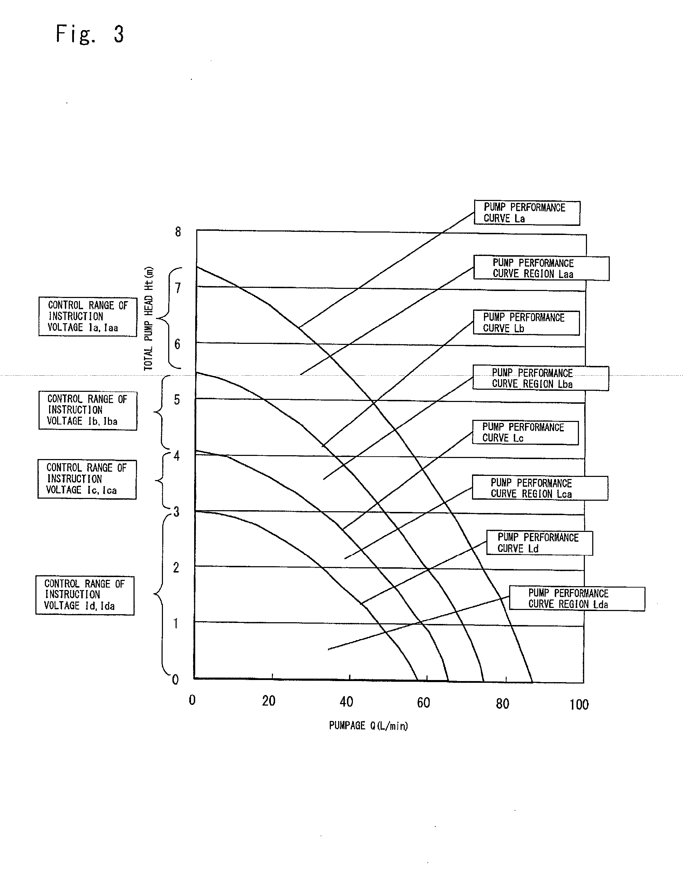

Transistors Tr5 to Tr7 in duty ratio instruction unit 5 are connected to output terminals of operational amplifiers OP1 to OP3 in determination circuits 31, 32, 33, respectively. Then, these transistors Tr5 to Tr7 also become ON-state and all of resistors R10 to R12 become connected to GND. Therefore, the instruction voltage Ia inputted to duty ratio instruction unit 5 is divided by a division ratio of resistors R10 to R17, and then is smoothed by resistors R10 to R17 and a time constant circuit composed of a resistor R18 and a capacitor C3, and is outputted to motor control unit 6 as a duty ratio instruction voltage Ka. Then, motor 7 is operated under PWM control at a duty ratio Da corresponding to the duty ratio instruction voltage Ka, and the pump operates on a pump performance curve La shown in Fig. 3.

At this time, all of transistors Tr8 to Tr10 in determination circuits 31, 32, 33 are in ON-state, and resistors R19 to R21 are connected to GND. In addition, resistor R19 is connected between a collector of transistor Tr8 and a minus input terminal in operational amplifier OP1, and resistor R20 is connected between a collector of transistor Tr9 and a minus input terminal in operational amplifier OP2, and resistor R21 is connected between a collector of transistor Tr10 and a minus input terminal in operational amplifier OP3. Therefore, division values, caused by voltage dividing resistors including resistors R19 to R21, are inputted into minus input terminals in operational amplifiers OP1 to OP3, respectively, and thereby voltages in the minus input terminals are reduced. Accordingly, hysteresis can be provided to plus input terminals in operational amplifiers OP1 to OP3, and chattering caused by outputs of operational amplifiers OP1 to OP3 can be prevented.

When the instruction voltage is reduced from voltage Ia to voltage Iaa, the instruction voltage Iaa is divided by a division ratio of resistors R10 to R17 and then is smoothed by resistors R10 to R17 and the time constant circuit composed of resistor R18 and capacitor C3 and then is outputted to motor control unit 6 as a duty ratio instruction voltage Kaa. Then, motor 7 is operated under PWM control at a duty ratio Daa corresponding to the duty ratio instruction voltage Kaa, and at this time the pump operates in a pump performance curve region Laa shown in Fig. 3.

Then, when the instruction voltage is further reduced to voltage Ib, a voltage in a plus input terminal becomes less than a voltage in a minus input terminal in regard to operational amplifier OP1 in determination circuit 31, and then an output in operational amplifier OP1 becomes Low-value. Thus, transistor Tr1 in motor voltage instruction unit 4 becomes OFF-state and resistor R3 becomes non-connected to GND. Then, a voltage depending on a division ratio of resistors R4 to R8, being more than a division ratio of resistors R3 to R8, is smoothed by resistors R4 to R8 and the time constant circuit composed of resistor R9 and capacitor C2, and then is inputted to a base terminal of transistor Tr4 in motor voltage control unit 40.

Accordingly, in order to produce a predetermined motor voltage value Vb being less than motor voltage value Va, transistor Tr4 in motor voltage control unit 40 becomes ON-state, and a signal is fed back to switching power source by light emitting of photo-coupler PC1. Thus, the predetermined motor voltage Vb is applied to motor 7.

Also, transistor Tr5 in duty ratio instruction unit 5, connected to an output terminal of operational amplifier OP1, becomes OFF-state and resistor R10 becomes non-connected to GND. Therefore, the instruction voltage Ib inputted to duty ratio instruction unit 5 is divided by a division ratio of resistors R11 to R16, and then is smoothed by resistors R11 to R17 and the time constant circuit composed of resistor R18 and capacitor C3, and is outputted to motor control unit 6 as a duty ratio instruction voltage Kb. Then, motor 7 is operated under PWM control at a duty ratio Db corresponding to the duty ratio instruction voltage Kb, and the pump operates on a pump performance curve Lb shown in Fig. 3.

At this time, transistor Tr8 in determination circuit 31 becomes OFF-state, and resistor R19, connected between a collector of transistor Tr8 and a minus input terminal in operational amplifier OP1, becomes non-connected to GND. A division value, caused by voltage dividing of resistors R22 and R23, is inputted into said minus input terminal, and thus a voltage in said minus input terminal is increased. Therefore, hysteresis can be provided to a plus input terminal in operational amplifier OP1, and chattering caused by output of operational amplifier OP1 can be prevented.

Then, when the instruction voltage is further reduced from voltage Ib to voltage Iba, the instruction voltage Iba is divided by a division ratio of resistors R11 to R16 and then is smoothed by resistors R11 to R17 and the time constant circuit composed of resistor R18 and capacitor C3 and then is outputted to motor control unit 6 as a duty ratio instruction voltage Kba. Then, motor 7 is operated under PWM control at a duty ratio Dba corresponding to the duty ratio instruction voltage Kba, and at this time the pump operates in a pump performance curve region Lba shown in Fig. 3.

Hereinafter, as the instruction voltage is reduced in order of voltage Ic being less than voltage Iba, voltage Ica being less than voltage Ic, voltage Id being less than voltage Ica, voltage Ida being less than voltage Id, outputs of operational amplifiers OP2 and OP3 become sequentially Low-value, and transistors Tr2 and Tr3 become sequentially OFF-state, and resistors R4 and R5 become sequentially non-connected to GND. Also, division ratios of voltages applied to a base terminal of transistor Tr4 in motor voltage control unit 40 become sequentially large. Then, motor voltage Vc being less than motor voltage Vb, and motor voltage Vd being less than motor voltage Vc are sequentially applied to motor 7.

Also, transistors Tr6 and Tr7 in duty ratio instruction unit 5 become sequentially OFF-state depending on reduction of the instruction voltage, and resistors R11 and R12 become sequentially non-connected to GND. Then, when transistor Tr6 becomes OFF-state, instruction voltages Ic and Ica are divided by a division ratio of resistors R12 to R15 and then are smoothed by resistors R12 to R17 and the time constant circuit composed of resistor R18 and capacitor C3 and are outputted to motor control unit 6 as a duty ratio instruction voltage Kc and a duty ratio instruction voltage Kca being less than the voltage Kc, respectively. Then, motor 7 is operated under PWM control at a duty ratio Dc corresponding to the duty ratio instruction voltage Kc and a duty ratio Dca being less than the duty ratio Dc, and at this time the pump operates on a pump performance curve Lc and in a pump performance curve region Lca shown in Fig. 3, respectively.

When transistor Tr7 becomes OFF-state, instruction voltages Id and Ida being less than the instruction voltage Ica are divided by a division ratio of resistors R13 and R14 and then are smoothed by resistors R13 to R17 and the time constant circuit composed of resistor R18 and capacitor C3 and are outputted to motor control unit 6 as a duty ratio instruction voltage Kd and a duty ratio instruction voltage Kda being less than the voltage Kd, respectively. Then, motor 7 is operated under PWM control at a duty ratio Dd corresponding to the duty ratio instruction voltage Kd and a duty ratio Dda being less than the duty ratio Dd, and at this time the pump operates on a pump performance curve Ld and in a pump performance curve region Lda shown in Fig. 3, respectively.

Then, when a minimum output is required for motor 7 in a state where the instruction voltage is 0[V] and after that the output of motor 7 is gradually increased, operation of the motor drive device is explained as follow. When an instruction voltage 0[V] being minimum voltage value is inputted to instruction input unit 2, voltages in plus input terminals become less than voltages in minus input terminals in regard to all of operational amplifiers OP1 to OP3 in determination circuits 31, 32, 33 and then outputs in operational amplifiers OP1 to OP3 become Low-value. As a result, all of transistors Tr1 to Tr3 in motor voltage instruction unit 4 become OFF-state, and then all of resistors R3 to R5 become non-connected to GND. Then, a voltage depending on a division ratio of resistors R6 to R8 is smoothed by resistors R6 to R8 and the time constant circuit composed of a resistor R9 and a capacitor C2, and then is inputted to a base terminal of a transistor Tr4 in motor voltage control unit 40. Thus, in order to produce a predetermined motor voltage value Vd determined by said division ratio, transistor Tr4 in motor voltage control unit 40 becomes ON-state, and a signal is fed back to the switching power source by light emitting of photo-coupler PC1, and thereby the predetermined motor voltage Vd is applied to motor 7.

At the same time, all of transistors Tr5 to Tr7 in duty ratio instruction unit 5, connected to output terminals of operational amplifiers OP1 to OP3, respectively, also become OFF-state and all of resistors R10 to R12 become non-connected to GND. Thus, the instruction voltage 0[V] inputted to duty ratio instruction unit 5 is divided by a division ratio of resistors R13 and R14. The instruction voltage 0[V] maintains 0[V] even after the voltage division, and then is smoothed by resistors R13 to R17 and the time constant circuit composed of resistor R18 and capacitor C3, and is outputted to motor control unit 6 as a duty ratio instruction voltage 0[V]. Then, motor 7 is operated under PWM control at a duty ratio 0[%] corresponding to the duty ratio instruction voltage 0[V].

At this time, all of transistors Tr8 to Tr10 in determination circuits 31, 32, 33 become OFF-state, and resistors R19 to R21 become non-connected to GND. Therefore, division values, caused by voltage dividing resistors R22 to R27 other than resistors R19 to R21, are inputted into minus input terminals in operational amplifiers OP1 to OP3.

When instruction voltage Ida being more than the instruction voltage 0[V] of the minimum voltage value is inputted into instruction input unit 2, the instruction voltage Ida is divided by a division ratio of resistors R13 and R14 and then is smoothed by resistors R13 to R17 and the time constant circuit composed of resistor R18 and capacitor C3, and is outputted to motor control unit 6 as a duty ratio instruction voltage Kda. Then, motor 7 is operated under PWM control at a duty ratio Dda corresponding to the duty ratio instruction voltage Kda, and thus the pump operates in the pump performance curve region Lda shown in Fig. 3.

When instruction voltage Id being more than the instruction voltage Ida is inputted into instruction input unit 2, the instruction voltage Id is divided by a division ratio of resistors R13 and R14 and then is smoothed by resistors R13 to R17 and the time constant circuit composed of resistor R18 and capacitor C3, and is outputted to motor control unit 6 as a duty ratio instruction voltage Kd. Then, motor 7 is operated under PWM control at a duty ratio Dd corresponding to the duty ratio instruction voltage Kd, and thus the pump operates on the pump performance curve Ld shown in Fig. 3.

When the instruction voltage is further increased from voltage Id to voltage Ica, a voltage in a plus input terminal becomes more than a voltage in a minus input terminal in regard to operational amplifier OP3 in determination circuit 33, and then an output in operational amplifier OP3 becomes High-value. Therefore, transistor Tr3 in motor voltage instruction unit 4 becomes ON-state and resistor R5 becomes connected to GND. Then, a voltage depending on a division ratio of resistors R5 to R8 is smoothed by resistors R5 to R8 and the time constant circuit composed of resistor R9 and capacitor C2, and then is inputted to a base terminal of transistor Tr4 in motor voltage control unit 40. Accordingly, in order to produce a predetermined motor voltage value Vc being more than motor voltage value Vd, transistor Tr4 in motor voltage control unit 40 becomes ON-state, and a signal is fed back to switching power source by light emitting of photo-coupler PC1, and thereby the predetermined motor voltage Vc is applied to motor 7.

Then, transistor Tr7 in duty ratio instruction unit 5, connected to an output terminal of operational amplifier OP3, also becomes ON-state and resistor R12 becomes connected to GND. Thus, instruction voltages Ica inputted into instruction input unit 2 is divided by a division ratio of resistors R12 to R15 and then are smoothed by resistors R12 to R17 and the time constant circuit composed of resistor R18 and capacitor C3 and are outputted to motor control unit 6 as a duty ratio instruction voltage Kca. As a result, motor 7 is operated under PWM control at a duty ratio Dca corresponding to the duty ratio instruction voltage Kca. Then, the pump operates in a pump performance curve region Lca shown in Fig. 3

At this time, transistor Tr10 in determination circuits 33 becomes ON-state, and resistor R21 becomes connected to GND. Therefore, a division value, caused by voltage dividing resistors R21, R26 and R27, is inputted into a minus input terminal in operational amplifier OP3 and a voltage of the minus input terminal in operational amplifier OP3 is reduced. Therefore, hysteresis can be provided to a plus input terminal in operational amplifier OP3, and chattering caused by output of operational amplifier OP3 can be prevented.

When instruction voltage Ic being more than the instruction voltage Ica is inputted into instruction input unit 2, the instruction voltage Ic is divided by a division ratio of resistors R12 to R15 and then is smoothed by resistors R12 to R17 and the time constant circuit composed of resistor R18 and capacitor C3, and is outputted to motor control unit 6 as a duty ratio instruction voltage Kc. Then, motor 7 is operated under PWM control at a duty ratio Dc corresponding to the duty ratio instruction voltage Kc, and thus the pump operates on the pump performance curve Lc shown in Fig. 3.

Hereinafter, as the instruction voltage is increased in order of voltage Iba being more than voltage Ic, voltage Ib being more than voltage Iba, voltage Iaa being more than voltage Ib, voltage Ia being more than voltage Iaa, outputs of operational amplifiers OP2 and OP1 become sequentially High-value, and transistors Tr2 and Tr1 become sequentially ON-state, and resistors R4 and R3 become sequentially connected to GND. Thus, division ratios of voltages applied to a base terminal of transistor Tr4 in motor voltage control unit 40 become sequentially small. Then, motor voltage Vb being more than motor voltage Vc, and motor voltage Va being more than motor voltage Vb are sequentially applied to motor 7.

Also, transistors Tr6 and Tr5 in duty ratio instruction unit 5 become sequentially ON-state, and resistors R11 and R10 become sequentially connected to GND. Then, when transistor Tr6 becomes ON-state, instruction voltages Iba and Ib are divided by a division ratio of resistors R11 to R16 and then are smoothed by resistors R11 to R17 and the time constant circuit composed of resistor R18 and capacitor C3 and are outputted to motor control unit 6 as a duty ratio instruction voltage Kba and a duty ratio instruction voltage Kb being more than the voltage Kba, respectively. Then, motor 7 is operated under PWM control at a duty ratio Dba corresponding to the duty ratio instruction voltage Kba and a duty ratio Db being more than the duty ratio Dba. Then, the pump operates in a pump performance curve region Lba and on a pump performance curve Lb shown in Fig. 3, respectively.

When transistor Tr5 becomes ON-state, instruction voltages Iaa and Ia are divided by a division ratio of resistors R10 and R17 and then are smoothed by resistors R10 to R17 and the time constant circuit composed of resistor R18 and capacitor C3 and are outputted to motor control unit 6 as a duty ratio instruction voltage Kaa and a duty ratio instruction voltage Ka being more than the voltage Kaa, respectively. Then, motor 7 is operated under PWM control at a duty ratio Daa corresponding to the duty ratio instruction voltage Kaa and a duty ratio Da being more than the duty ratio Daa. Then, the pump operates in a pump performance curve region Laa and on a pump performance curve La shown in Fig. 3, respectively.

Here, resistance values of resistors R10 to R17 are set so that R14 /(R13+R14) is k, a division ratio of resistors R12 to R15 is k^2, a division ratio of resistors R11 to R16 is k^3, a division ratio of resistors R10 to R17 is k^4. Furthermore, instruction voltages Ia, Ib, Ic and Id are set so as to have a relationship of geometric progression. That is, when instruction voltages Ib, Ic, Id are set into Ia*k, Ia*k^2, Ia*k^3, respectively, a duty ratio instruction voltage upon instruction voltages Ia is Ia*k^4, and a duty ratio instruction voltage upon instruction voltages Ib is Ib*k^3 = Ia*k^4, and a duty ratio instruction voltage upon instruction voltages Ic is Ic*k^2 = Ia*k^4, and a duty ratio instruction voltage upon instruction voltages Id is Id*k = Ia*k^4. Accordingly, all duty ratio instruction voltages upon instruction voltages Ia to Id are Ia*k^4.

That is, duty ratio instruction voltages Kb to Ka between instruction voltages Ib and Ia, duty ratio instruction voltages Kc to Kb between instruction voltages Ic and Ib, and duty ratio instruction voltages Kd to Kc between instruction voltages Id and Ic are the same voltage range. Accordingly, duty ratios for PWM control between instruction voltages Ib and Ia, between instruction voltages Ic and Ib, and between instruction voltages Id and Ic can be set to the same range.

Then, every time when duty ratios for PWM control between instruction voltages Ib and Ia, between instruction voltages Ic and Ib, and between instruction voltages Id and Ic reach predetermined lower limits, motor voltage is changed from Va to Vb, from Vb to Vc, from Vc to Vd, respectively. Then, PWM control always starts at an upper limit with respect to each duty ratio, and thereby duty ratios for PWM control can be set into more than or equal to predetermined values. Therefore, the motor drive device can avoid the problem that switching loss increases with reduction of duty ratios upon PWM control, and can reduce the switching loss.

In regard to between instruction voltage 0 and Id, the instruction voltage also includes 0[V], and thus an upper limit in duty ratio instruction voltages 0 to Kd is the same as upper limits in duty ratio instruction voltages Kb to Ka, in duty ratio instruction voltages Kc to Kb, and in duty ratio instruction voltages Kd to Kc. Therefore, an upper limit of a duty ratio for PWM control between instruction voltage 0 and Id is the same as upper limits of duty ratios for PWM control between instruction voltages Ib and Ia, between instruction voltages Ic and Ib, and between instruction voltages Id and Ic.

That is, in control range of a case where a motor voltage Va, Vb or Vc other than a minimum motor voltage Vd is applied, a duty ratio for PWM control can be set into more than or equal to a predetermined value. As a result, the motor drive device can reduce not only switching losses upon these PWM controls but also switching loss upon PWM control in a case where the motor voltage Vd is applied, because the motor voltage Vd itself is small. Accordingly, the motor drive device can reduces switching losses for PWM control in all control ranges.

Here, if motor voltages Va, Vb, Vc and Vd are also set so as to have a relationship of geometric progression as Vb=Va*k, Vc=Va*k^2, Vd=Va*k^3 and upper limits of duty ratios for PWM control between instruction voltages Ib and Ia, between instruction voltages Ic and Ib and between instruction voltages Id and Ic are set to "1" and lower limits thereof are set to "k", a motor voltage effective value upon a lower limit between instruction voltages Ib and Ia is Va*k and a motor voltage effective value upon instruction voltage Ib is Vb*1=Va*k. That is, both are Va*k, and thus when the instruction voltage is changed from Iaa to Ib, these pump performances can be smoothly linked to each other. Also, when the instruction voltage is changed from Iba to Ic or from Ica to Id, these pump performances can be smoothly linked to each other as well.

When the above-mentioned predetermined value "k" is set to more than or equal to 0.7, preferably more than or equal to 0.8, switching loss upon PWM control can be considerably reduced. Here, resistance values of resistors R10 to R17 are set so as to satisfy, for example, resistor R13: resistors R15 to R17: resistors R10 to R12, R14 = 1: 0.2: 4, and thereby the predetermined value "k" can be set to 0.8.

In addition, the instruction voltage may be imported from an A/D converter into a microcomputer, and then the microcomputer may compare the instruction voltage with a predetermined voltage value and then may output a signal into the motor voltage instruction unit or may directly output a signal for feedback into the switching power source, and thereby the motor voltage may be controlled. Furthermore, the motor drive device may be configured so that the microcomputer outputs into the duty ratio instruction unit and directly outputs the duty ratio instruction voltage or the duty ratio, and thereby the motor is operated under PWM control

In above-mentioned embodiment, the motor voltage is switched at multiple steps. But, the motor drive device may be configured so that the motor voltage is switched only at two steps.

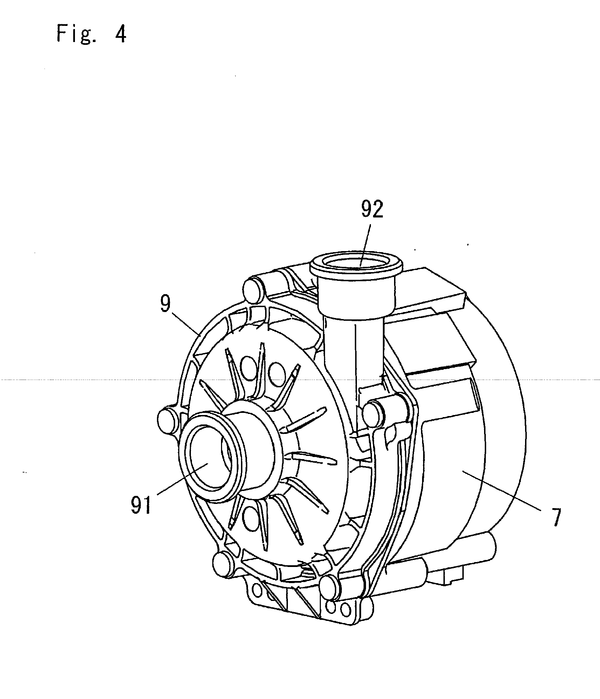

Fig. 4 shows one example of a pump 9 comprising the above motor 7. The pump 9 is a canned motor pump and has a rotating impeller (not shown) driven by motor 7 built-in. A suction opening 91 is located in an axial direction of a rotating center of the impeller. Then, pump 9 sucks fluid via suction opening 91 and discharges the fluid via a discharge opening 92 located in a periphery of the impeller.

Although the present invention has been described with reference to certain preferred embodiments, numerous modifications and variations can be made by those skilled in the art without departing from the true spirit and scope of this invention, namely claims.

## Claims

1. A motor drive device comprising:
an instruction input unit (2) to which an instruction input related to a power level of a motor (7) is inputted;
a motor voltage control unit (40) controlling a motor voltage depending on an instruction voltage outputted based on the instruction input inputted to said instruction input unit (2); and
a motor control unit (6) operating said motor (7) under PWM control depending on the instruction voltage outputted from said instruction input unit (2),
**characterized in that**:
said motor voltage control unit (40) is configured so as to decrease the motor voltage when a duty ratio of the PWM control is less than or equal to a predetermined value.

2. The motor drive device as claimed in claim 1,
wherein said motor voltage control unit (40) is configured to apply a plurality of motor voltages corresponding to a plurality of instruction inputs, respectively, into said motor (7), and further is configured to control so that the duty ratio of the PWM control is more than or equal to a predetermined value when a motor voltage other than the lowest motor voltage in said plurality of motor voltages is applied.

3. The motor drive device as claimed in claim 2,
wherein said plurality of motor voltages corresponding to said plurality of instruction inputs are set so as to have a relationship of geometric progression.

4. The motor drive device as claimed in claim 2 or 3,
wherein the instruction voltage is divided by a predetermined division ratio through a signal for changing said plurality of motor voltages depending on the instruction input.

5. The motor drive device as claimed in any one of claims 1-4, wherein the instruction input is a DC voltage, or a voltage obtained by smoothing a PWM signal and changing the smooth PWM signal to a direct current.

6. A pump comprising the motor drive device as claimed in any one of claims 1-5 as a power source.
